# EUROPEAN PATENT APPLICATION

(11) **EP 4 671 208 A1**
(43) Date of publication of application: **31.12.2025**
(21) Application number: 24759977.2
(22) Date of filing: 18.01.2024
(51) Int. Cl.: C01F 11/06, C01B 32/50, C01F 5/06, C01F 11/04, C09K 5/14, C09K 11/55

(54) **METHOD FOR ENDOTHERMICALLY REACTING SOLID AND METHOD FOR PRODUCING OXIDE**

(30) Priority: 22.02.2023 JP 2023026243
(71) Applicant: Ashidachi Lime Co., Ltd., Nimi-shi, Okayama 718-0006 (JP)
(72) Inventor: OKAMOTO, Yasuhiro, Kurashiki-shi, Okayama 710-0805 (JP); SHIZUKA, Shunjiro, Nimi-shi, Okayama 718-0006 (JP); FUJIKI, Shuji, Nimi-shi, Okayama 718-0006 (JP); OKA, Masakazu, Nimi-shi, Okayama 718-0006 (JP)
(74) Representative: TBK
(86) International application number: PCT/JP2024/001305
(87) International publication number: WO 2024/176670

(57) **Abstract**

An improvement in purity of an oxide obtained by baking limestone or the like has been required, and with regard to a production method therefor, a reduction in carbon dioxide emission has been attracting attention as an important issue toward the achievement of a decarbonized society. Provided is a method of endothermically reacting a solid adjacent to an oxide of Ca and/or Mg in a luminescent state involving continuous luminescence by heat radiation, the method including: irradiating the oxide in the luminescent state with laser light; and endothermically reacting the solid with heat from the oxide in the luminescent state that has absorbed the laser light. Also provided is a method of producing a corresponding oxide from a carbonate of Ca and/or Mg serving as the solid.

## Description

### Technical Field

The present invention relates to a method of endothermically reacting a solid with heat from an oxide containing Ca and/or Mg in a luminescent state by heat radiation, and a method of producing an oxide.

### Background Art

Oxides obtained from a carbonate and a hydroxide each containing Ca or Mg, such as limestone, dolomite, and magnesite, have each been used in applications widely supporting the basis of industrial technology, such as ironmaking, a cement raw material, papermaking, a building raw material, a desiccant, a fertilizer, and a food additive.

### Citation List

### Patent Literature

[PTL 1] JP 2012-201571 A

### Summary of Invention

### Technical Problem

In the related art, the oxides may each be produced by heating a carbonate thereof in a kiln such as a Maerz furnace. However, the oxide produced in the related art contains impurities, such as a sulfur content and an ash content derived from a fuel. An oxide having a higher purity has been required in order that the oxide may be used in the above-mentioned industrial technology applications where an improvement in quality has been required in recent years.

In addition, a large-sized apparatus such as a Maerz furnace has been unsuitable for baking limestone as fine as 10 mm or less that becomes redundant in a mine, and for obtaining high-quality quicklime low in impurities. However, it has been considered that a method by which the fine-grained limestone can be baked in a short time period and with high quality, if possible, is useful because the method leads to effective exploitation of limestone resources and can meet various industrial requests.

In addition, in view of a recent trend toward the achievement of a decarbonized society, the storage of surplus power resulting from the loss of power demand supply balance has been attracting attention as an important issue.

In addition, in view of the recent trend toward the achievement of a decarbonized society, a reduction in carbon dioxide emission has been attracting attention as an important issue. A kiln such as a Maerz furnace emits a large amount of carbon dioxide because the kiln uses a fossil fuel such as heavy oil. It has been considered to be useful to refrain from using the fossil fuel as a fuel for baking limestone in terms of the reduction in carbon dioxide emission.

Limestone particles each having a size of 1.0 mm or less that becomes redundant in a mine find use in limited applications because the particles merely become quicklime having a size of 1.0 mm or less even when baked in a kiln. Not only the quicklime having a size of 1.0 mm or less but also particulate quicklime having a size of about 10 mm is required in the above-mentioned industrial technology applications. It has been considered that when the limestone particles can be baked into quicklime having a size of about 10 mm, effective exploitation of limestone resources is achieved.

### Solution to Problem

The present invention includes the following aspects 1 to 9.
[Aspect 1] A method of endothermically reacting a solid adjacent to an oxide of Ca and/or Mg in a luminescent state involving continuous luminescence by heat radiation, the method including: irradiating the oxide in the luminescent state with laser light; and endothermically reacting the solid with heat from the oxide in the luminescent state that has absorbed the laser light.
[Aspect 2] The method according to Aspect 1, wherein the oxide in the luminescent state is produced as a result of the absorption of the laser light.
[Aspect 3] A method of producing a corresponding oxide from a carbonate of Ca and/or Mg serving as the solid by the method of Aspect 1 or 2.
[Aspect 4] A method of producing a corresponding oxide from a hydroxide of Ca and/or Mg serving as the solid by the method of Aspect 1 or 2.
[Aspect 5] A heat storage medium, including an oxide produced by the production method of Aspect 3.
[Aspect 6] An energy storage method, including using, as a heat storage medium, an oxide produced by the production method of Aspect 4.
[Aspect 7] A method of forming, from a particle of a carbonate of Ca and/or Mg serving as the solid, an aggregate having a particle diameter larger than that of the particle, and producing an oxide corresponding to the carbonate of Ca and/or Mg by the method of Aspect 1 or 2.
[Aspect 8] A carbon dioxide absorber, including a hydroxide obtained by a hydration reaction of an oxide produced by the production method of Aspect 3.
[Aspect 9] A carbon dioxide recovery method, including causing a hydroxide obtained by a hydration reaction of an oxide produced by the production method of Aspect 3 to absorb carbon dioxide present therearound.

The solid adjacent to the oxide in the luminescent state may be any other solid arranged in contact with the oxide in the luminescent state, or may be a solid portion formed as a substance integrated with a state before the oxide in the luminescent state is brought into the luminescent state, the solid portion forming a peripheral edge area brought into contact with the outer edge portion of the oxide in the luminescent state formed in part of the integrated substance.

In claim 6 of Claims, the heat storage medium according to the present invention is represented by a production method. This is based on the fact that the following circumstances are present: at the time of the filing of the present application, it is impossible or utterly impractical to directly identify whether or not the product is produced by the production method of claim 4 on the basis of its structure or characteristics. In addition, in claim 8 of Claims, the carbon dioxide absorber according to the present invention is represented by a production method. This is based on the fact that the following circumstances are present: at the time of the filing of the present application, it is impossible or utterly impractical to directly identify whether or not the product is produced by the production method of claim 3 on the basis of its structure or characteristics.

The oxide of Ca and/or Mg may be preferably a mineral or rock containing quicklime (CaO), MgO, or CaO·MgO.

The carbonate of Ca and/or Mg may be preferably a mineral or rock, such as limestone (CaCO₃), magnesite (MgCO₃), or dolomite (CaMg(CO₃)₂).

When the oxide of Ca and/or Mg is an oxide of Ca, quicklime in the luminescent state involving the continuous luminescence by the heat radiation is preferably quicklime produced as a result of the absorption of the laser light into limestone.

When the oxide of Ca and/or Mg is an oxide of Mg, the oxide of Mg in the luminescent state involving the continuous luminescence by the heat radiation is preferably an oxide produced as a result of the absorption of the laser light into magnesite.

When the oxide of Ca and/or Mg is an oxide of Ca and Mg, the oxide of Ca and Mg in the luminescent state involving the continuous luminescence by the heat radiation is preferably an oxide produced as a result of the absorption of the laser light into dolomite.

The particle diameter of the particle is preferably from 0.1 mm to 1.0 mm, more preferably from 0.3 mm to 0.8 mm.

The hydroxide of Ca and/or Mg serving as the solid may be preferably a substance containing hydrated lime (Ca(OH)₂).

The hydroxide of Ca and/or Mg serving as the solid may be preferably a substance containing magnesium hydroxide (Mg(OH)₂).

The hydroxide of Ca and/or Mg serving as the solid may be preferably a substance containing dolomite hydroxide (Ca (OH) ₂·Mg(OH) ₂).

### Advantageous Effects of Invention

According to the present invention, a new endothermic reaction involving continuous candoluminescence can be achieved.

According to the present invention, there can be provided a high-purity oxide of Ca and/or Mg whose CO₂ residual amount is suppressed to 10 mass% or less.

In addition, the inclusion of impurities, such as a sulfur content and an ash content (containing iron, nickel, vanadium, and silica as main components) derived from a fuel, at the time of production can be eliminated in advance, and hence a method of producing a high-purity oxide of Ca and/or Mg can be designed.

According to the present invention, high-purity quicklime can be produced by using limestone as a carbonate of Ca and/or Mg, and hence there can be provided a high-quality raw material that supports key industries, such as ironmaking, cement, and papermaking.

According to the present invention, a high-purity oxide based on baked magnesite can be produced by using magnesite as a carbonate of Ca and/or Mg, and hence there can be provided a high-quality raw material that supports key industries such as ironmaking.

According to the present invention, a high-purity oxide based on baked dolomite can be produced by using dolomite as a carbonate of Ca and/or Mg, and hence there can be provided a high-quality raw material that supports key industries such as ironmaking.

Further, a high-purity heat storage medium can be obtained by using the oxide of Ca and/or Mg obtained by the present invention, and hence a high-accuracy energy storage system can be achieved.

A carbon dioxide emission can be significantly reduced because no fossil fuel is used in baking, and power generated from renewable energy is used.

According to the present invention, the method of producing a corresponding oxide from the carbonate of Ca is applicable to a step of causing an endothermic reaction from the carbonate of Ca to the corresponding oxide in cement production.

The use of the hydroxide obtained by the hydration reaction of the oxide of Ca and/or Mg obtained by the present invention can achieve a carbon dioxide recovery system.

### Brief Description of Drawings

FIG. 1 is a photograph from an oblique viewing direction showing the external appearance of a bulk-shaped specimen formed into a plate shape, the specimen being used in Examples, and shows a specimen formed from limestone as an example.
FIG. 2(a) is a view for illustrating the configuration of a baking apparatus for performing laser light baking according to the present invention, and FIG. 2(b) is a photograph showing the appearance of a beam formed in a ring mode.
FIG. 3 is a graph showing a temperature change in a portion irradiated with laser light when a limestone specimen is continuously irradiated with the laser light at a fixed point for 24 seconds.
FIG. 4 is a graph modeled by a heat flux through use of a heat input by candoluminescence as a temperature variable.
FIG. 5 is a graph showing results obtained by reproducing the results of the temperature measurement of FIG. 3, in which the fixed-point irradiation is performed, through unsteady heat transfer analysis.
FIG. 6 is a photograph showing the appearance of candoluminescence occurring when the bulk-shaped limestone specimen is irradiated with laser light.
FIG. 7 is a graph showing the results of the measurement of the CO₂ residual amount of a specimen in an area subjected to laser light baking. The axis of ordinate indicates a laser power, and the axis of abscissa indicates a laser light scanning speed.
FIG. 8 is a photograph showing the results of the observation of a temperature distribution on the surface of limestone with an infrared camera in each of: the case where candoluminescence occurs during irradiation under irradiation conditions in the case of laser light scanning; and the case where no candoluminescence occurs during the irradiation.
FIG. 9 is a graph showing the results of the XRD of a specimen obtained by baking involving candoluminescence through the irradiation of particulate limestone with laser light.
FIG. 10(a) is a photograph showing the results of the observation of the surface of the limestone specimen by Raman spectroscopy in the case where the specimen is subjected to non-luminescent intermediate baking at about 900°C and in the case where the specimen emits candoluminescence, and FIG. 10(b) is a photograph showing the results of the observation of a section thereof by the Raman spectroscopy in the cases.
FIG. 11 is a photograph showing a manner in which the following scan is performed: the irradiation of a specimen, which is obtained by coating an area ranging from an end of the bulk-shaped limestone specimen to a position distant therefrom by 5 mm with carbon, with laser light is started from the coated portion of the coated specimen, and the specimen is scanned with the light toward an opposite side thereof.
FIG. 12 is a graph showing the results of the measurement of the CO₂ residual amount of the carbon-coated specimen in an area subjected to laser light baking in correspondence with the conditions of the laser power and laser light scanning speed of FIG. 7. The axis of ordinate indicates the laser power, and the axis of abscissa indicates the laser light scanning speed.
FIG. 13 is a set of a view and a photograph for illustrating the outline of an apparatus for baking a particulate specimen through irradiation with laser light from its upper surface direction.
FIG. 14 is a schematic view of a baking dish for subjecting the particulate specimen to laser light baking.
FIG. 15 is a photograph showing the appearance of candoluminescence occurring when a particulate limestone specimen is irradiated with laser light.
FIG. 16(a) is an enlarged image of limestone particles before laser light irradiation, and FIG. 16(c) is an enlarged view of a quicklime aggregate after its baking involving continuous candoluminescence by the laser light irradiation. In addition, FIG. 16(b) is an enlarged image of particles subjected to non-luminescent intermediate baking in which no luminescence is observed during its laser light irradiation.
FIG. 17 is a graph showing a temperature change in a portion irradiated with laser light when particulate hydrated lime is continuously irradiated with the laser light at a fixed point for 60 seconds.
FIG. 18 is a photograph showing an aggregate obtained by subjecting the particulate hydrated lime to laser light baking involving candoluminescence.
FIG. 19 is a graph showing a temperature change in a portion irradiated with laser light when dolomite is continuously irradiated with the laser light at a fixed point for 60 seconds.
FIG. 20 is a graph showing a manner in which a CO₂ residual amount of 10 mass% or less is observed in the resultant oxide when continuous candoluminescence is observed in the case where dolomite is subjected to laser light baking.
FIG. 21 is a graph showing a temperature change in a portion irradiated with laser light when magnesite is continuously irradiated with the laser light at a fixed point for 350 seconds.
FIG. 22 is a graph showing a manner in which a CO₂ residual amount of 10 mass% or less is observed in the resultant oxide when continuous candoluminescence is observed in the case where magnesite is subjected to laser light baking.
FIG. 23 is a graph showing the results of the XRD of an oxide of hydrated lime obtained by baking involving candoluminescence through laser light irradiation.
FIG. 24 is a graph showing the results of the XRD of an oxide of dolomite obtained by baking involving candoluminescence through laser light irradiation.
FIG. 25 is a graph showing the results of the XRD of an oxide of magnesite obtained by baking involving candoluminescence through laser light irradiation.
FIG. 26 is a photograph showing an aggregate obtained by subjecting particulate dolomite to laser light baking involving candoluminescence.
FIG. 27 is a photograph showing an aggregate obtained by subjecting particulate magnesite to laser light baking involving candoluminescence.

### Examples

Examples of the present invention are specifically described below, but the present invention is not limited to the following description of Examples.

### [Example 1]

### (1) Temperature Change by Fixed-point Laser Light Baking

In this Example, description is given by taking an example using limestone including the carbonate of Ca.

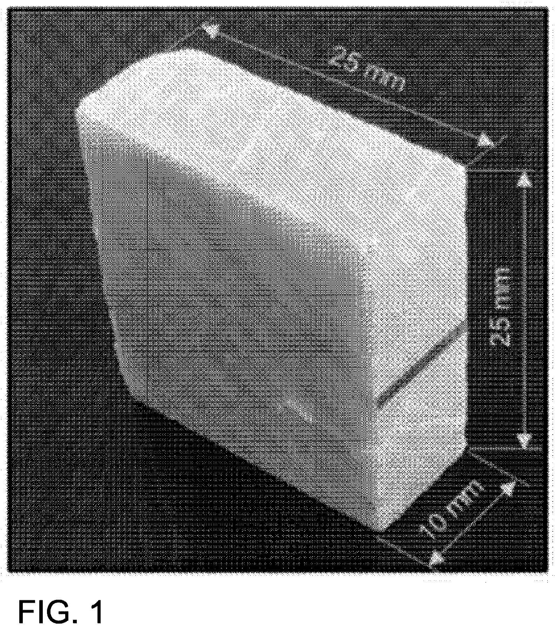

A bulk specimen formed into a plate shape measuring 25 mm by 25 mm by 10 mm as shown in FIG. 1 was used as a limestone specimen.

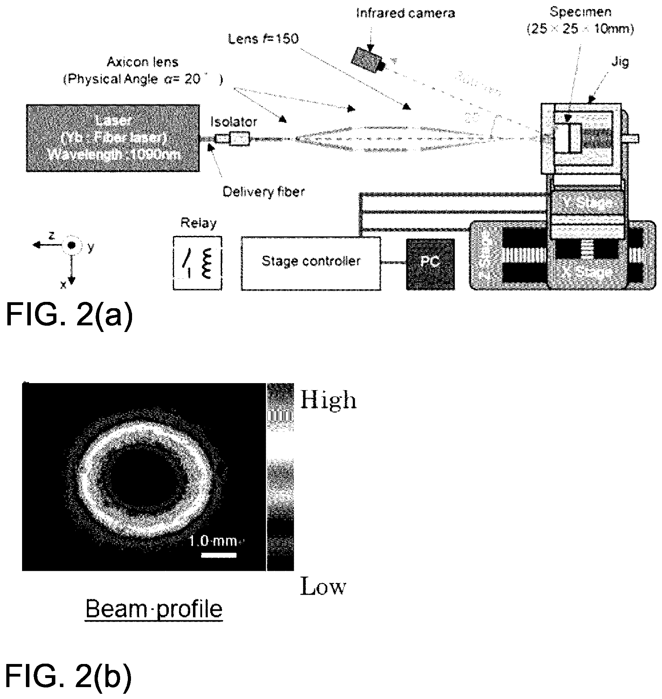

The limestone specimen was attached to a baking apparatus illustrated in FIG. 2(a), and its baking with laser light was performed.

A continuous oscillation single mode fiber laser that can output near infrared light having a wavelength of 1,090 nm is used as a laser light vibration generator. The light emitted from the vibration generator is delivered by an optical fiber. An isolator was arranged to prevent damage to the vibration generator caused by light returning from the specimen. An axicon lens and a condensing lens were arranged to set the shape of a beam to a ring mode. To scan the limestone specimen with the laser light, a structure in which the specimen fixed to a jig can be moved at any speed by an X, Y, and Z automatic stage is adopted. Laser light irradiation and stage scanning are controlled by a trigger using a relay circuit. The size of the beam was set to a size (ring mode having an outer diameter of from 2.0 mm to 3.0 mm and an inner diameter of from 1.0 mm to 1.5 mm) reduced in removal processing as compared to a Gaussian mode (substantially circular shape in which a range irradiated with the laser light was solid). When the shape of the beam is set to such a ring mode as shown in FIG. 2(b), it becomes easier to control the temperature of the surface of the specimen irradiated with the laser light, and hence it becomes possible to control a baked area and the removal processing.

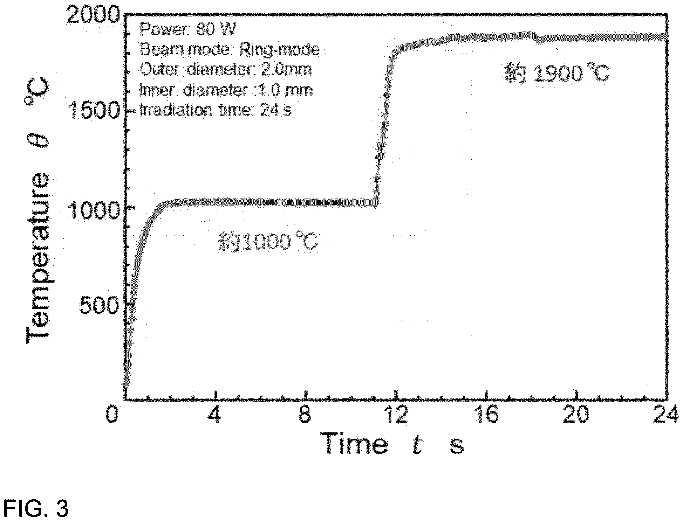

FIG. 3 is a graph showing a temperature change in a portion irradiated with ring-mode laser light having an outer diameter of 2.0 mm and an inner diameter of 1.0 mm when a limestone specimen is continuously irradiated with the laser light at a power of 80 W and at a fixed point for 24 seconds without being scanned therewith. A bulk-shaped limestone specimen shown in FIG. 1 was used as the limestone specimen. As shown in FIG. 3, when the limestone was irradiated with the laser light under a certain condition, the baking temperature of the limestone specimen stagnated at about 1,000°C for a certain time period, and when the laser light irradiation was continued, a temperature as high as 1,900°C was able to be generated together with luminescence by heat radiation (hereinafter referred to as "candoluminescence"). No candoluminescence from the limestone specimen was observed when its baking temperature stagnated at about 1,000°C (hereinafter referred to as "non-luminescent intermediate baking").

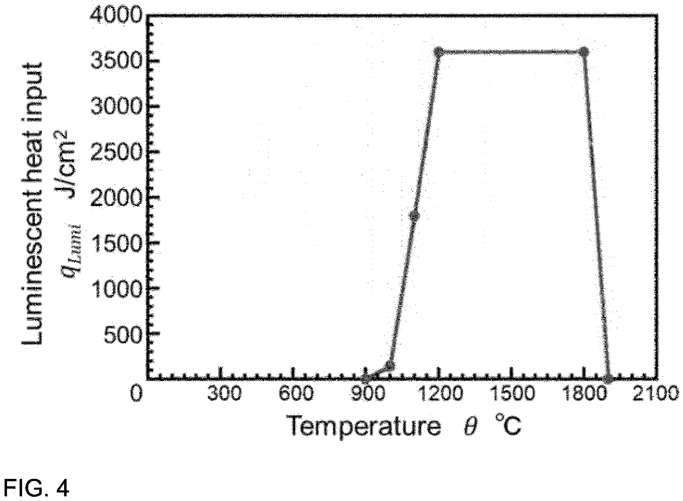

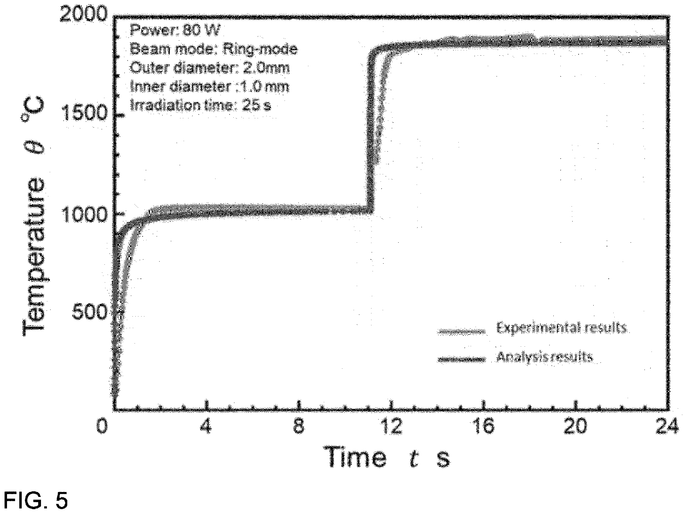

In discussing the mechanism via which heat is input to the specimen at the time of the occurrence of the candoluminescence, a graph modeled by a heat flux through use of a heat input by the candoluminescence as a temperature variable is shown in FIG. 4. An attempt was made to reproduce the candoluminescence by: abruptly applying the heat flux at from 1,000°C in the temperature change model of the heat flux; and abruptly reducing the heat flux after its temperature had reached 1,900°C. Results obtained by reproducing the results of the temperature measurement of FIG. 3 through unsteady heat transfer analysis are shown in FIG. 5. It is found from FIG. 5 that the temperature stagnation at about 1,000°C and the temperature at the time of the candoluminescence can be reproduced. The power of the laser light is constant, and hence it is conceivable that the fact that the baking involved the candoluminescence was able to cause, in the portion irradiated with the laser light, a change in ratio at which the laser light was absorbed corresponding to a change in heat flux, and thus a new endothermic reaction was able to be achieved. In addition, according to the present invention, the occurrence of the candoluminescence can exhibit a baking effect by the new endothermic reaction on an area adjacent to an oxide in a candoluminescent state, which is specifically, for example, the solid portion of a peripheral edge area integrally formed in contact with the outer edge portion of the oxide in the candoluminescent state or any other solid arranged in contact with the oxide in the candoluminescent state.

It is assumed from the foregoing that when the candoluminescence occurs, in addition to a heat input from the laser light to be applied, the ratio at which the laser light is absorbed into the specimen increases to cause a heat input from the candoluminescence. Thus, it is conceivable that the baking temperature of the specimen can be caused to reach a temperature much higher than a baking temperature achieved by a conventional kiln.

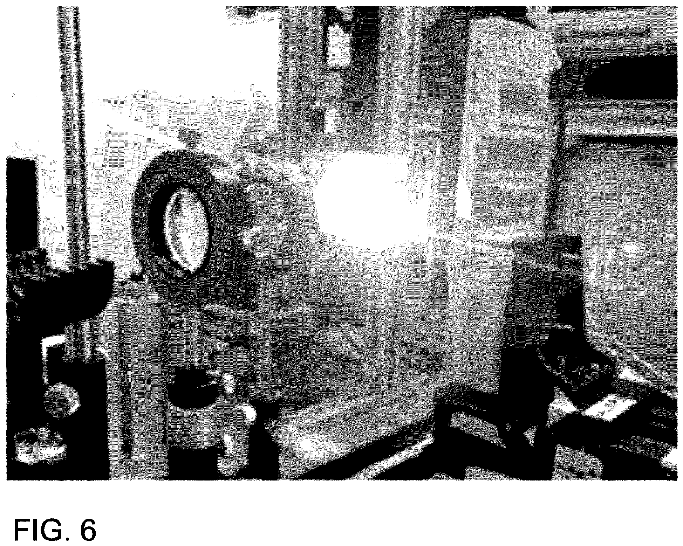

The appearance of candoluminescence occurring when the bulk-shaped limestone specimen of FIG. 1 is irradiated with laser light is shown in FIG. 6. When the specimen is irradiated with high-power density laser light, light is emitted from its surface irradiated with the laser light.

### [Example 2]

### (1) Baking by Laser Light Scanning and CO₂ Residual Amount Measurement

Next, conditions in the case where candoluminescence occurred and the case where no candoluminescence occurred were searched for while the top of the limestone specimen was scanned with the laser light by driving the automatic stage, followed by the measurement of a CO₂ residual amount in quicklime serving as an oxide corresponding to the limestone baked in each of the cases. Conditions for the laser light scanning were as follows: ring-mode laser light having an outer diameter of 3.0 mm and an inner diameter of 1.5 mm was used; and the scanning was performed while a pitch-to-pitch distance was set to such a constant distance (3.0 mm) that no beams overlapped each other.

The following method was adopted as a method of collecting quicklime from a baked area: a flat end mill having a blade diameter of 6 mm was attached to a fraise; and an area from the surface of the specimen to a depth of 1.0 mm was shaved off. The collected specimen was evaluated for its CO₂ residual amount by an infrared absorption method specified in JIS R9011. The limestone specimen used in this Example contained about 44 mass% of CO₂.

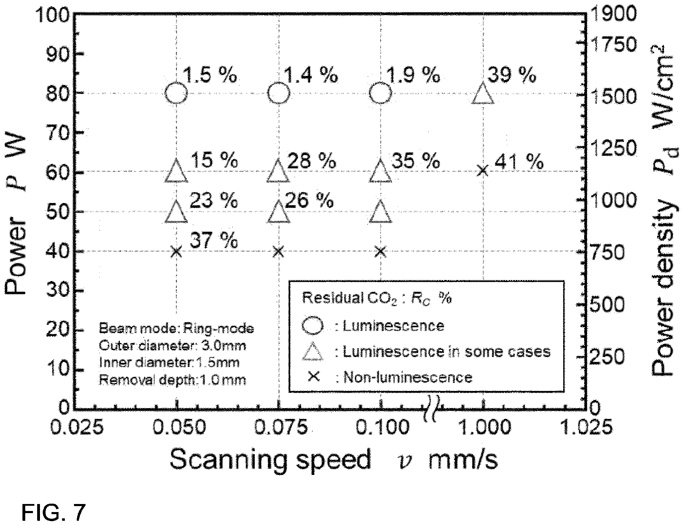

The results of the measurement of the CO₂ residual amount of the specimen in the area subjected to the laser light baking are shown in FIG. 7. The axis of ordinate of FIG. 7 indicated a laser light power, and the axis of abscissa thereof indicated a scanning speed. In FIG. 7, a circle means that the candoluminescence was continuously observed during the laser light irradiation, a triangle means that the candoluminescence was observed in a flickering manner, and a cross means that no candoluminescence occurred.

In addition, in FIG. 7, a result of the measurement of the CO₂ residual amount is shown at the upper right of each symbol. Under the conditions (a power of 80 W and a scanning speed of from 0.050 mm/s to 0.100 mm/s) under which the candoluminescence continuously occurred, the CO₂ residual amount was 2.0 mass% or less, and hence quicklime corresponding to the JIS special grade was obtained. However, when the laser light power was reduced or the scanning speed was increased, the state of the specimen shifted to a state in which the candoluminescence from the specimen occurred in a flickering manner, and the CO₂ residual amount became from 15 mass% to 39 mass%. In addition, when the laser light power was further reduced, or the scanning speed was further increased, from that under the conditions under which the flickering candoluminescence occurred, the candoluminescence no longer occurred, and the CO₂ residual amount increased to from 37 mass% to 41 mass%. The CO₂ residual amount was not able to be set to 2.0 mass% or less under conditions except those under which the candoluminescence continuously occurred.

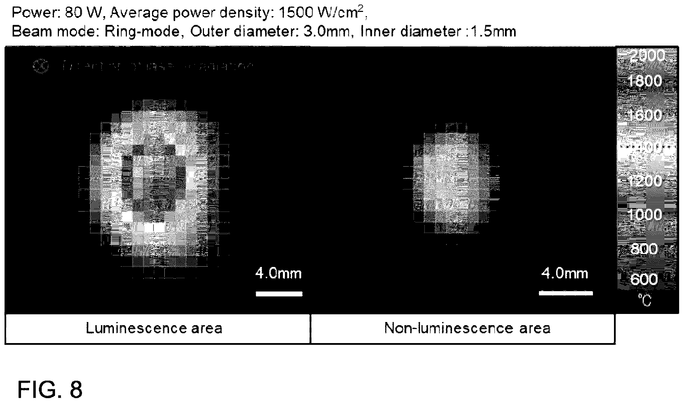

The results of the observation of a temperature distribution on the surface of the limestone with an infrared camera in the following cases are shown in FIG. 8: the case where the candoluminescence occurred during the irradiation under irradiation conditions in the case of the scanning with the laser light; and the case where no candoluminescence occurred during the irradiation. Irrespective of the presence or absence of the candoluminescence, the limestone specimen was scanned with the laser light under the same conditions (a power of 80 W, an outer diameter of 3.0 mm, and an inner diameter of 1.5 mm). As can be seen from FIG. 8, while the maximum temperature was about 1,000°C (corresponding to a cross mark in FIG. 7) (only a white area at about 1,000°C is shown in the right-hand side photograph of FIG. 8) when no candoluminescence occurred, the maximum temperature increased to about 1,800°C (corresponding to a circle mark in FIG. 7) (a black portion in the central portion of the left-hand side photograph of FIG. 8 represents a temperature of about 1,800°C) when the candoluminescence occurred.

When quicklime is produced from limestone by baking, the production has heretofore been performed by heating the limestone to from 900°C to 1,000°C with a Maerz furnace or the like. Accordingly, it is found that an endothermic reaction from the limestone serving as the carbonate of Ca to the quicklime serving as the oxide of Ca occurs even in an area from a cross mark to a circle mark in FIG. 7.

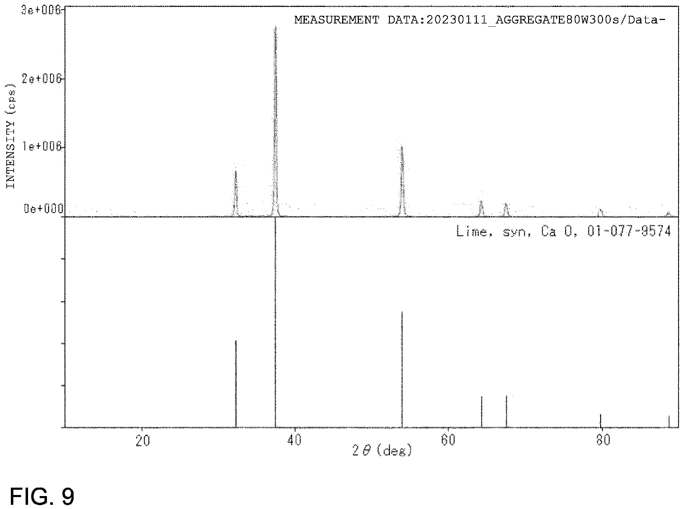

In addition, the results of the XRD of a specimen obtained by baking involving candoluminescence through laser light irradiation are shown in FIG. 9. It was found from FIG. 9 that the baking involving the candoluminescence, which was performed through the laser light irradiation, produced, from limestone, quicklime (CaO) serving as the oxide thereof.

Each step of the above-mentioned quicklime production method is described. The method includes the steps of: irradiating a processing object containing calcium carbonate with laser light; and producing calcium oxide involving continuous luminescence by heat radiation from calcium carbonate incorporated into the processing object through an endothermic reaction from the applied laser light. Further, it can be said that the method is a method of processing calcium carbonate characterized by including a step of endothermically reacting another calcium carbonate adjacent to the calcium oxide involving the continuous luminescence through an endothermic reaction from the calcium oxide involving the continuous luminescence. Further, it can be said that the method is a method of producing quicklime by the method of processing calcium carbonate.

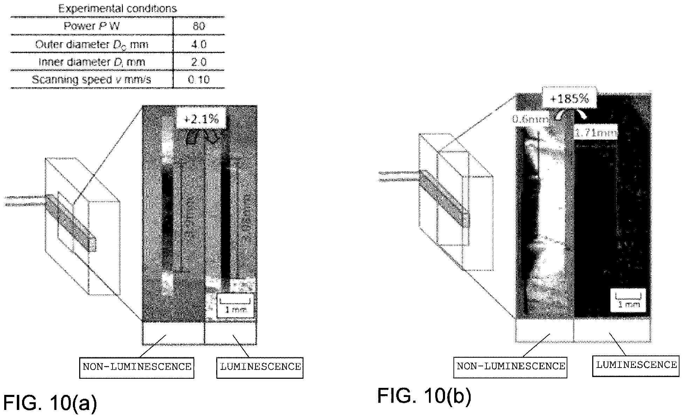

The results of the observation of the surface of the limestone specimen by Raman spectroscopy in the case where the specimen is subjected to non-luminescent intermediate baking at about 900°C and in the case where the specimen emits candoluminescence are shown in FIG. 10(a). The results of the observation of a section thereof by the Raman spectroscopy in the cases are shown in FIG. 10(b).

It was recognized from FIG. 10(a) that in the case where the specimen emitted the candoluminescence, the increase ratio of the baking width of its surface increased by about 2.1% as compared to that in the case where the specimen did not emit any light. Meanwhile, as shown in FIG. 10(b), it was found that while the baking depth of the section in the case where the specimen did not emit any light was 0.6 mm, the depth increased by 185% to largely increase to 1.71 mm in the case where the specimen emitted the candoluminescence. This is probably because the baking of the specimen involved the candoluminescence, and hence the temperature of the surface increased to largely increase the baking depth. It is conceivable that as a result of the foregoing, the following specific baking effect is exhibited to achieve high-heat baking that is not obtained by baking with a conventional kiln: heat is applied from a portion that has caused the candoluminescence to a peripheral area adjacent thereto, and hence baking means different from the laser light is obtained.

Further, when reference is made to FIG. 10(b), in the case of the non-luminescent intermediate baking, a certain baking depth was observed, but in the case where the candoluminescence occurred, a semielliptical baked area was observed around a laser light scanning line. This is probably because of the following reason. When no candoluminescence occurred, a temperature at the center of the ring of the laser light formed a relatively low temperature distribution because only a heat input by the laser light was present. In contrast, when the candoluminescence occurred, a heat input by the candoluminescence was added to the heat input to increase the temperature at the center of the ring, and hence the semielliptical baked area was formed. Accordingly, it was found that the temperature distribution in the case where the candoluminescence occurred and that in the case where no candoluminescence occurred largely differed from each other, and hence their control enabled baking in which a feature of the ring mode was exploited to avoid a local heat input.

However, the shape of the beam that may be used in the present invention is not limited to the ring mode, and the present invention may be carried out even by any other shape such as a Gaussian mode.

It was revealed from the foregoing that the utilization of baking by laser light irradiation involving candoluminescence made the following large contribution to baking: a CO₂ residual amount reduced, and a baking width and a baking depth increased.

Further, quicklime is obtained by thermally decomposing limestone through baking, and industrially, its grade becomes higher as its CO₂ residual amount reduces. In JIS R9001, quicklime having a CO₂ residual amount of 2.0 mass% or less is specified as a special grade.

The special-grade quicklime may be used for ironmaking, and the use of high-quality quicklime as a basic flux for removing impurities, such as sulfur and phosphorus, in a main raw material, such as molten iron or scrap iron, enables the performance of high-quality ironmaking.

The utilization of the heat input by the candoluminescence was able to achieve the baking of quicklime corresponding to the JIS special grade. In addition, according to the present invention, the inclusion of impurities, such as a sulfur content and an ash content (containing iron, nickel, vanadium, and silica as main components) derived from a fuel, into an oxide of Ca and/or Mg serving as a product does not occur, and hence there can be provided a high-purity oxide product. Accordingly, the method of the present invention may be an environmentally advantageous baking method.

### [Example 3]

An area ranging from an end of the bulk-shaped limestone specimen to a position distant therefrom by 5 mm was coated with carbon by using a black body spray THI-1B (manufactured by Tasco Japan Co., Ltd.) (the resultant specimen is hereinafter referred to as "coated specimen").

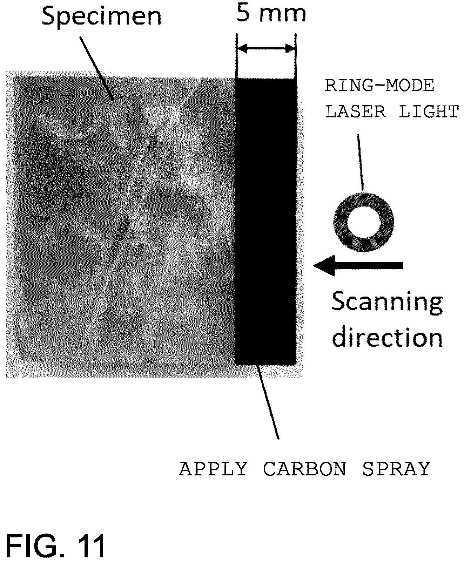

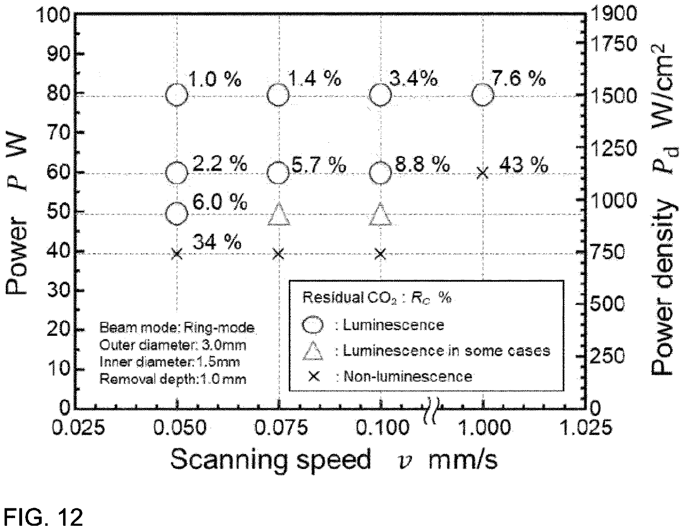

Irradiation with laser light set to the same ring mode as that of Example 2 was started from the coated portion of the coated specimen, and as shown in FIG. 11, the specimen was baked while being scanned with the light toward an opposite side thereof. Results obtained by performing the baking while changing a laser power and a scanning speed in the same manner as in FIG. 7 are shown in FIG. 12.

As a result, continuous candoluminescence was able to be observed even under part of the conditions under which the candoluminescence flickered in Example 2. The CO₂ residual amount of the specimen after the baking was measured in the same manner as in Example 2. As a result, as shown in FIG. 12, pieces of quicklime each having a CO₂ residual amount as low as 10 mass% or less were able to be obtained, though not all of the pieces had CO₂ residual amounts of 2.0 mass% or less. Meanwhile, also in this Example, when the candoluminescence flickered or no candoluminescence occurred, the CO₂ residual amount of the specimen after the baking was more than 10 mass%.

In addition, the candoluminescence was able to be accelerated by increasing the absorptivity of the limestone specimen for the laser light. In addition, it was recognized that even when the specimen was scanned with the laser light from its area having applied thereto the carbon to its area to which no carbon was applied, the candoluminescence was continuously maintained as it was. Accordingly, first, the occurrence of a temperature increase through a heat input by the laser light is an important factor for the occurrence of the candoluminescence. Further, an increase in temperature near the portion of the specimen irradiated with the laser light through the heat input by the laser light and a heat input by the candoluminescence itself may be important for the continuation of the candoluminescence.

### [Example 4]

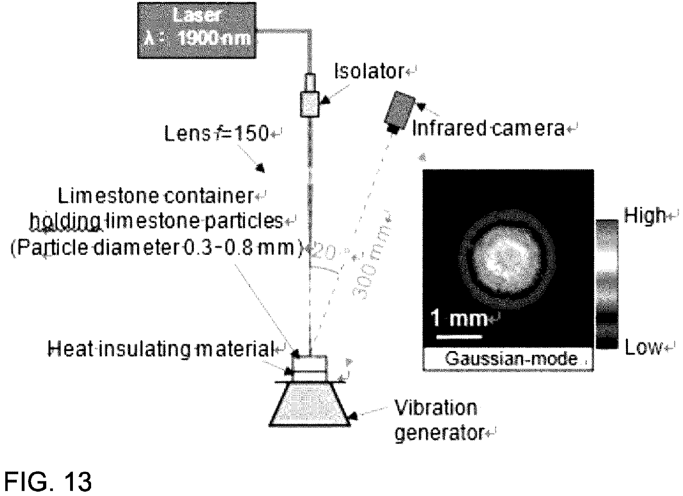

In addition, the present invention can deal even with particulate limestone by using an apparatus illustrated in FIG. 13 and changing the irradiation of the limestone with laser light to irradiation with the laser light from its upper surface. In addition, a configuration that can perform continuous baking may be formed by arranging an apparatus for supplying limestone and discharging baked quicklime.

Further, the inventors of the present invention have found, as a feature peculiar to the baking of particles involving candoluminescence, that the aggregate of oxide particles can be formed after the baking. An example thereof is described in detail below.

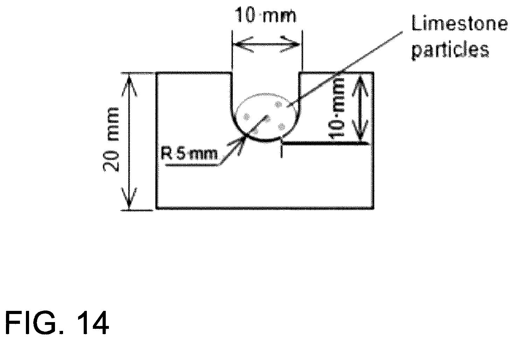

Limestone particles each having a particle diameter of from 0.3 mm to 0.8 mm were used as a specimen to be irradiated with the laser light. Those particles were loaded into such a baking dish as illustrated in FIG. 14, and under a state in which the particles were gathered, the laser apparatus illustrated in FIG. 13 was used to apply the laser light under a state in which the particles were stirred while being vibrated (at a total amplitude of 0.145 mm, a vibration speed of 54.0 mm/s, and a frequency of 120 Hz).

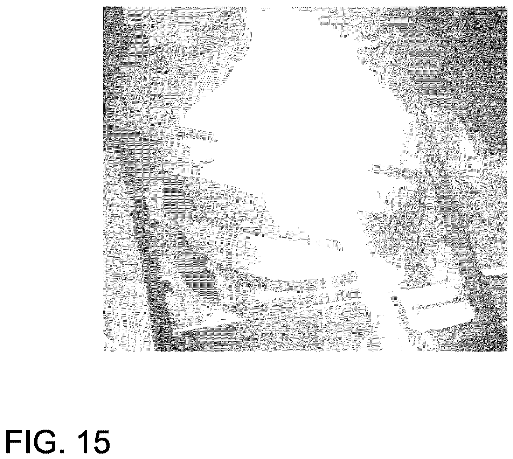

As a result, even in the limestone particles, candoluminescence was able to be observed as shown in FIG. 15.

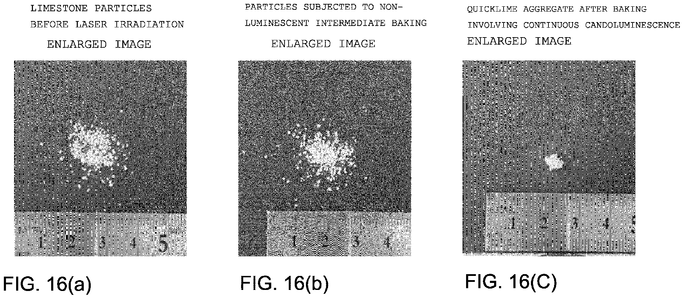

Further, in FIGS. 16, an enlarged image of the limestone particles before the laser light irradiation (FIG. 16(a)), and an enlarged view of a quicklime aggregate after its baking involving continuous candoluminescence by the laser light irradiation (FIG. 16(c)) are shown. In addition, an enlarged image of particles subjected to non-luminescent intermediate baking in which no luminescence is observed during its laser light irradiation is shown in FIG. 16(b).

According to FIGS. 16, before the laser light baking, the respective particles were not bonded to each other, and were hence in a state of being capable of freely scattering on a plane. An aggregate having a particle diameter of from 6 mm to 8 mm in which its particles were bonded to each other was able to be obtained by subjecting such particles to laser light baking involving candoluminescence. Thus, as an effect peculiar to the laser light baking of the particles involving continuous candoluminescence, quicklime having a size larger than those of the limestone particles serving as a raw material can be produced and provided. Meanwhile, the particles subjected to the non-luminescent intermediate baking were in a state of being capable of freely scattering as in the particles before the laser light irradiation, and hence no aggregate was able to be obtained.

### [Example 5]

In this Example, a case in which hydrated lime (Ca(OH)₂) was baked by the method of the present invention is described.

A Ca(OH)₂ specimen obtained as follows was used as a specimen: a Ca(OH)₂ powder raw material was compacted with a manual compactor to be granulated into particles each having a particle diameter of about 0.8 mm. The Ca(OH)₂ specimen was stored in a baking dish under a state in which many of its particles were gathered, followed by the arrangement of the dish in the laser light irradiation apparatus of FIG. 13.

The specimen was irradiated with laser light under the following conditions: a fixed point on the Ca(OH)₂ specimen was continuously irradiated with Gaussian-mode laser light having an outer diameter of 2.2 mm at a power of 80 W for 60 seconds without the scanning of the specimen with the light. During the laser light irradiation, vibration (having a total amplitude of 0.145 mm, a vibration speed of 54.0 mm/s, and a frequency of 120 Hz) was applied with a vibrator to stir the specimen.

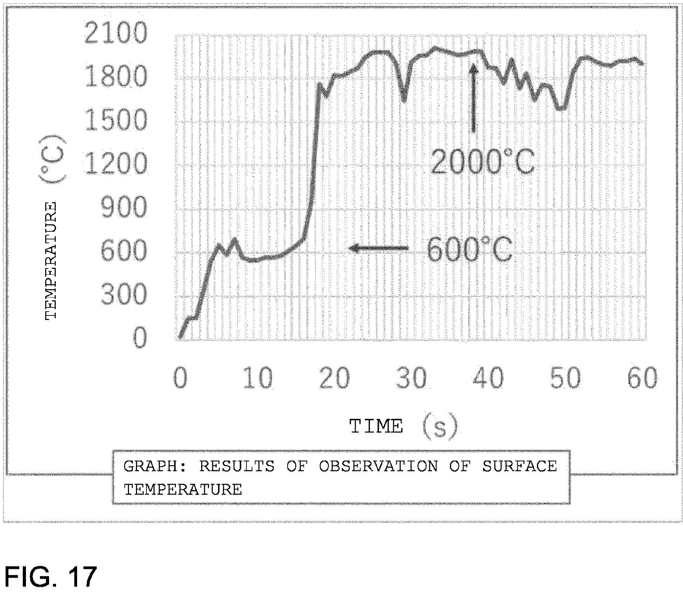

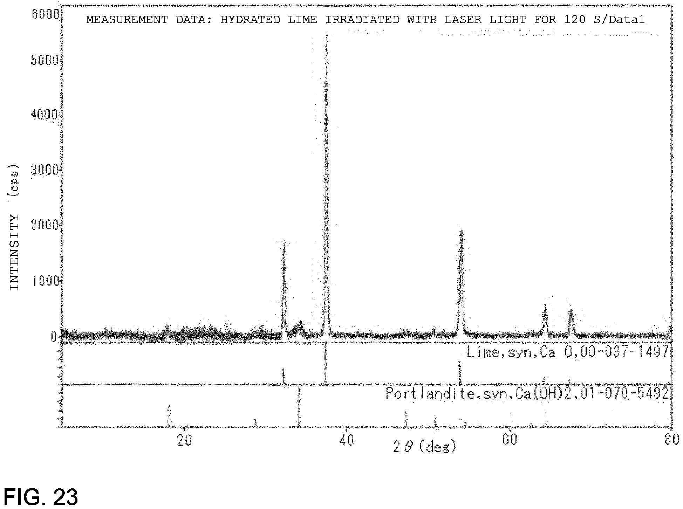

A change in temperature of the baked portion of the specimen is shown in FIG. 17. Even when Ca(OH)₂ was subjected to laser light baking, an increase in temperature thereof stagnated at about 600°C once, and then the increase in temperature was observed up to about 2,000°C while involving candoluminescence. Thus, continuous candoluminescence was also able to be observed from Ca(OH)₂. The results of the XRD of an oxide of Ca(OH)₂ obtained by subjecting Ca(OH)₂ to the baking involving the candoluminescence through the laser light irradiation are shown in FIG. 23. It was found from FIG. 23 that when the baking involving the candoluminescence was performed by the laser light irradiation, the oxide (CaO) was produced from Ca(OH)₂.

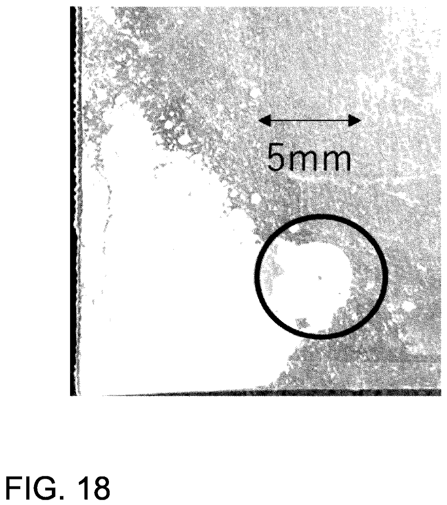

In addition, an aggregate was able to be obtained from Ca(OH)₂ powder (the inside of a circle mark in FIG. 18).

### [Example 6]

### (1) Laser Light Baking of Dolomite and Magnesite

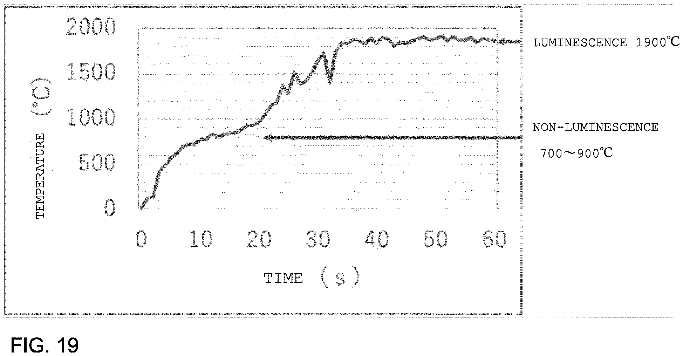

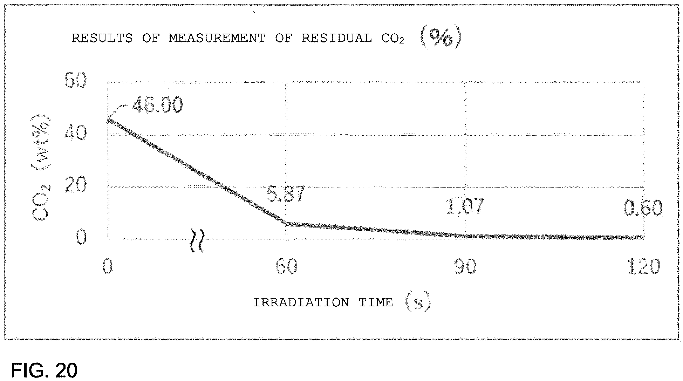

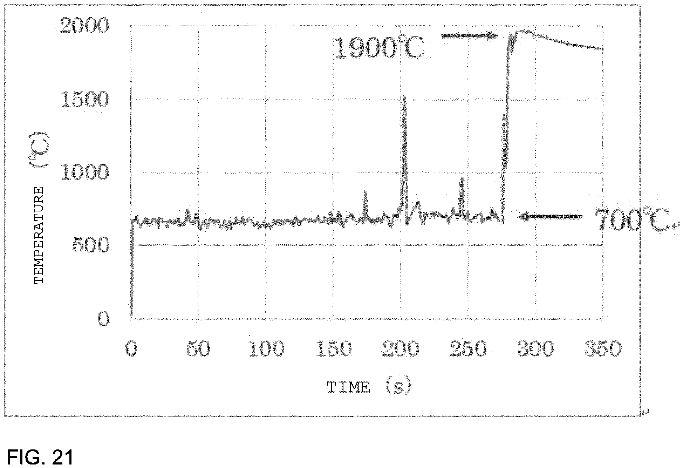

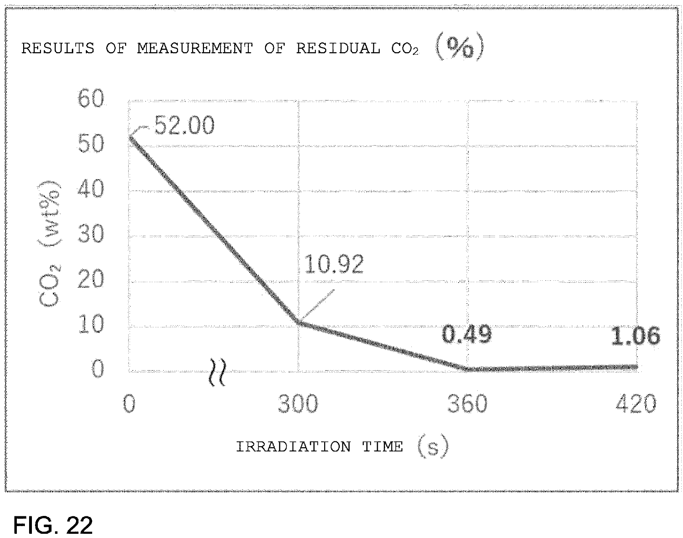

Further, even when dolomite and magnesite were each subjected to laser light baking under the same conditions as those of Example 1, as in limestone, an increase in temperature thereof stagnated at from about 700°C to about 900°C once, and the increase in temperature was observed up to about 1,900°C by continuing laser light irradiation. The appearance of the temperature increase in the case of dolomite is shown in FIG. 19, and the appearance of the temperature increase in the case of magnesite is shown in FIG. 21. In addition, in dolomite, continuous candoluminescence was observed when the irradiation was continued for 45 seconds or more (FIG. 19), and in magnesite, continuous candoluminescence was observed when the irradiation was continued for 300 seconds or more (FIG. 21). When CO₂ residual amounts in the oxides in each of which the continuous candoluminescence had been observed were measured, high-purity oxides each having a CO₂ residual amount of 10 mass% or less were able to be produced, and when the laser light irradiation was performed for a longer time period, an extremely high-purity oxide having a CO₂ residual amount of 2.0 mass% or less was able to be produced in each of the specimens (FIG. 20 and FIG. 22).

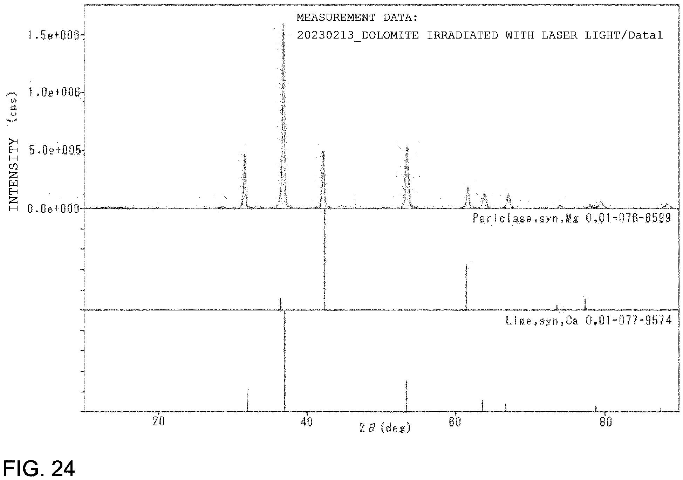

In addition, the results of the XRD of the dolomite obtained by baking involving candoluminescence through laser light irradiation are shown in FIG. 24. It was found from FIG. 24 that the baking involving the candoluminescence, which was performed through the laser light irradiation, produced, from the dolomite, the oxide thereof (CaO·MgO).

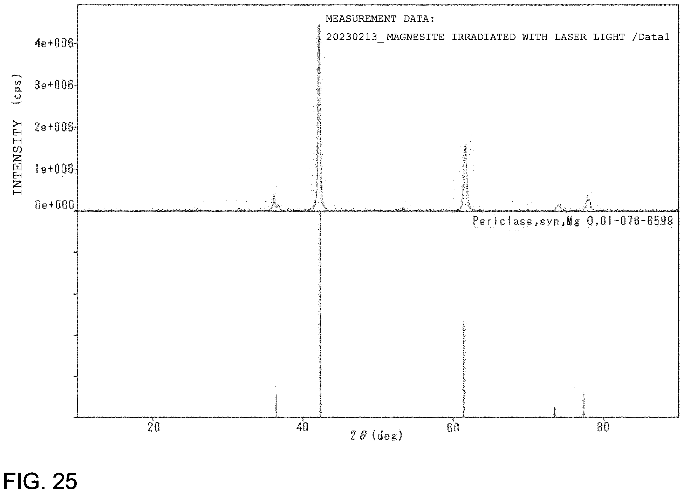

In addition, the results of the XRD of the magnesite obtained by baking involving candoluminescence through laser light irradiation are shown in FIG. 25. It was found from FIG. 25 that the baking involving the candoluminescence, which was performed through the laser light irradiation, produced, from the magnesite, the oxide thereof (MgO).

### (2) Formation of Aggregate by Laser Light Baking of Particulate Dolomite

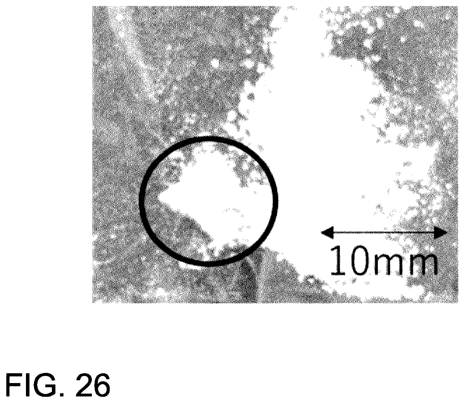

The appearance of an oxide specimen obtained as follows is shown in FIG. 26: 0.4 g of a particulate dolomite specimen having a particle diameter of about 0.8 mm, which is brought into a stirred state with a vibrator (having a total amplitude of 0.145 mm, a vibration speed of 54.0 mm/s, and a frequency of 120 Hz), is irradiated with Gaussian-mode laser light having a beam diameter of 2.2 mm at a power of 80 W for 120 seconds. According to FIG. 26, continuous candoluminescence was observed from the specimen irradiated with the laser light under the conditions, and an aggregate having a diameter larger than the particle diameter before the irradiation was able to be formed (the inside of a circle mark in FIG. 26). The particle diameter of the particulate dolomite for forming the aggregate is preferably from 0.1 mm to 1.0 mm, more preferably from 0.3 mm to 0.8 mm.

### (3) Formation of Aggregate by Laser Light Baking of Particulate Magnesite

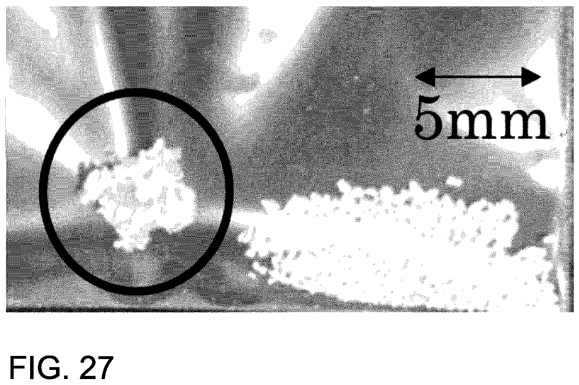

The appearance of an oxide specimen obtained as follows is shown in FIG. 27: 0.4 g of a particulate magnesite specimen having a particle diameter of about 0.8 mm, which is brought into a stirred state with a vibrator (having a total amplitude of 0.054 mm, a vibration speed of 25.5 mm/s, and a frequency of 120 Hz), is irradiated with Gaussian-mode laser light having a beam diameter of 2.2 mm at a power of 80 W for 360 seconds. According to FIG. 27, continuous candoluminescence was observed from the specimen irradiated with the laser light under the conditions, and an aggregate having a diameter larger than the particle diameter before the irradiation was able to be formed (the inside of a circle mark in FIG. 27). The particle diameter of the particulate magnesite for forming the aggregate is preferably from 0.1 mm to 1.0 mm, more preferably from 0.3 mm to 0.8 mm.

In each of Example 4 and Example 6, in the case where the particulate specimen was vibrated with the vibrator at the time of the formation of the aggregate, an aggregate larger than that in the case where the specimen was not vibrated was able to be obtained. Conditions for the vibration are not limited to those described in Example 4 and Example 6, and the specimen irradiated with the laser light only needs to be vibrated when the specimen is in a luminescent state involving continuous candoluminescence.

According to the present invention, there can be provided a high-purity oxide of Ca and/or Mg whose CO₂ residual amount is suppressed to 10 mass% or less. In addition, the inclusion of impurities, such as a sulfur content and an ash content (containing iron, nickel, vanadium, and silica as main components) derived from a fuel, at the time of production can be eliminated in advance, and hence a method of producing a high-purity oxide of Ca and/or Mg can be designed. Further, the use of the oxide of Ca and/or Mg obtained by the present invention can provide a high-purity heat storage medium, and hence there can be achieved: a high-accuracy energy storage system; and a carbon dioxide recovery method characterized in that a carbon dioxide absorber, which includes a hydroxide of Ca and/or Mg obtained by the hydration reaction of the oxide of Ca and/or Mg produced by the production method according to the present invention, is formed, and carbon dioxide present around the carbon dioxide absorber is absorbed. In addition, a metal or the like serving as an object to be subjected to laser processing may be incorporated into a solid that is endothermically reacted by the present invention.

### (Energy Storage System)

The oxide of Ca and/or Mg obtained by the present invention may be utilized as a heat source because heat can be generated by subjecting the oxide to a hydration reaction. Further, the following cycle can be established: laser light is applied to a hydroxide after the hydration reaction to cause baking involving candoluminescence, thereby returning the hydroxide to the oxide. A high-accuracy energy storage system using the oxide of Ca and/or Mg as a heat storage medium can be formed.

### (CO₂ Recovery Method)

A carbon dioxide absorber, which includes a hydroxide of Ca and/or Mg obtained by the hydration reaction of the oxide of Ca and/or Mg, can absorb carbon dioxide present therearound. There can be achieved a carbon dioxide recovery method in which laser light is applied to the carbon dioxide absorber, which has been caused to absorb carbon dioxide, to cause baking involving candoluminescence, and hence the oxide is obtained, and at the same time, a high concentration of carbon dioxide can be taken out.

## Claims

1. A method of endothermically reacting a solid adjacent to an oxide of Ca and/or Mg in a luminescent state involving continuous luminescence by heat radiation, the method comprising:
irradiating the oxide in the luminescent state with laser light; and
endothermically reacting the solid with heat from the oxide in the luminescent state that has absorbed the laser light.

2. The method according to claim 1, wherein the oxide in the luminescent state is produced by the absorption of the laser light.

3. A method of producing a corresponding oxide from a carbonate of Ca and/or Mg serving as the solid by the method of claim 1 or 2.

4. A method of producing a corresponding oxide from a hydroxide of Ca and/or Mg serving as the solid by the method of claim 1 or 2.

5. A heat storage medium, comprising an oxide produced by the production method of claim 3.

6. An energy storage method, comprising using, as a heat storage medium, an oxide produced by the production method of claim 4.

7. A method of forming, from a particle of a carbonate of Ca and/or Mg serving as the solid, an aggregate having a particle diameter larger than that of the particle, and producing an oxide corresponding to the carbonate of Ca and/or Mg by the method of claim 1 or 2.

8. A carbon dioxide absorber, comprising a hydroxide obtained by a hydration reaction of an oxide produced by the production method of claim 3.

9. A carbon dioxide recovery method, comprising causing a hydroxide obtained by a hydration reaction of an oxide produced by the production method of claim 3 to absorb carbon dioxide present therearound.
